# EUROPÄISCHE PATENTSCHRIFT

(11) **EP 2 599 659 B1**
(45) Veröffentlichungstag und Bekanntmachung des Hinweises auf die Patenterteilung: **14.09.2016**
(21) Anmeldenummer: 12194405.2
(22) Anmeldetag: 27.11.2012
(51) Int. Cl.: B60N 2/22, B60N 2/48

(54) **Fahrzeugsitz und Nutzfahrzeug**
Vehicle seat and commercial vehicle
Siège de véhicule véhicule utilitaire

(30) Priorität: 30.11.2011 DE 102011055897; 30.11.2011 DE 102011055895
(43) Veröffentlichungstag der Anmeldung: 05.06.2013
(73) Patentinhaber: GRAMMER AG, 92224 Amberg (DE)
(72) Erfinder: Bühlmeyer, Katja, 92281 Königstein (DE); Haller, Erwin, 92262 Birgland (DE); Kolb, Jens, 92281 Königstein (DE); Übelacker, Roland, 92536 Pfreimd (DE); Meiller, Hermann, 92533 Wernberg-Köblitz (DE)
(74) Vertreter: Hannke, Christian

(56) Entgegenhaltungen:
- FR-A1- 2 929 185
- GB-A- 2 453 165
- US-A- 937 343

## Beschreibung

Die Erfindung betrifft einerseits einen Fahrzeugsitz mit einem Sitzteil und mit einem Rückenlehnenteil zum Stützen eines Fahrzeugführers in seiner Sitzposition auf dem Fahrzeugsitz.

Andererseits betrifft die Erfindung ein Nutzfahrzeug, insbesondere ein landwirtschaftliches Nutzfahrzeug, mit einem Fahrzeugsitz für einen Fahrzeugführer.

Gattungsgemäße Fahrzeugsitze insbesondere für Nutzfahrzeuge und speziell für landwirtschaftliche Nutzfahrzeuge sind aus dem Stand der Technik vielfältig und gut bekannt.

Insbesondere Fahrzeugführer von landwirtschaftlichen Nutzfahrzeugen nehmen bei ihrer Arbeit mit diesen landwirtschaftlichen Nutzfahrzeugen und daran angehängten Arbeitsgeräten oftmals über einen längeren Zeitraum eine von der normalen nach vorne in Fahrrichtung gerichteten Fahrsitzhaltung eine seitlich oder rückwärtig ausgerichtete Sitzarbeitshaltung ein, um beispielsweise seitlich hinten in der Fahrzeugkabine angeordnete Bedienelemente besser erreichen und bedienen zu können, oder auch um ein hinter dem landwirtschaftlichen Nutzfahrzeug angehängtes Arbeitsgerät für einen längeren Zeitraum zu beobachten.

Beispielsweise ist aus der Offenlegungsschrift DE 30 46 049 A1 ein Sitz mit einer Rückenlehne bekannt, bei welchem die Rückenlehne oder zumindest eine Rückenlehnenverlängerung, welche einen oberen Teil der Rückenlehne ausgestaltet, um eine vertikale Achse drehbar ist, damit für einen Fahrer rückwärtig angeordnete Bedienungsorgane besser erreichbar sind. Zwar sind durch die drehbare Rückenlehnenverlängerung diese Bedienungsorgane in der Tat durch den Fahrer besser zu erreichten. Jedoch kann der Fahrer in einer rückwärtig gerichteten Arbeitshaltung, beispielsweise beim Beobachten von Arbeitsgeräten während eines Feldeinsatzes, nicht zusätzlich gestützt werden, da sich die Rückenlehnenverlängerung bei einer derartigen außermittigen Belastung wieder in ihre Ursprungslage zurückdrehen würde.

Bei moderneren Fahrzeugen können Fahrzeugführer derzeit sogar den gesamten Fahrzeugsitz, also die im Wesentlichen gesamte starre Sitzkonstruktion mitsamt dem Sitzteil und dem Rückenlehnenteil, mit Hilfe eines Drehadapters um eine definierte Drehhochachse schwenken. Dabei bleibt das Sitzteil in Relation zum Rückenlehnenteil fest stehen. Dies führt zum einen dazu, dass der Fahrzeugführer sich aus einer komfortablen Sitzpolsterkontur des Fahrzeugsitzes herausdrehen muss, um insbesondere die Pedalerie des landwirtschaftlichen Nutzfahrzeugs weiter einigermaßen betriebssicher betätigen zu können. Dies kann zu Druckstellen und damit zu Diskomfort speziell im Gesäß- und Oberschenkelbereich des Fahrzeugführers führen.

Etwaige Anbauteile am Fahrzeugsitz, beispielsweise eine Multifunktionsarmlehne, drehen sich ebenso in Relation dazu mit. Bedienhebel, die weiter hinten seitlich angeordnet sind, können dadurch immer noch nicht komfortabel betätigt werden.

Die Rückenpolsterkontur ist aktuell derart ausgeformt, dass der Fahrzeugführer in der vorwärts gerichteten Fahrsitzhaltung maximal möglich gestützt wird, ohne ihm die notwendigen Freiheitsgrade zu nehmen, die er für seine Bewegungen im Fahrbetrieb benötigt. Um eine Bewegungsfreiheit im Schulter-Armbereich nicht zu behindern, darf das Rückenpolster des Rückenlehnenteils im oberen Bereich nicht zu sehr konturiert sein. Um jedoch eine gute Abstützung und damit eine ausreichend gute Entlastung des Fahrführers zu gewährleisten, sollte eine Abstützungsfläche immer möglichst groß sein. Dies kann aus den vorher genannten Gründen, wie etwa die erforderlichen Freiheitsgrade für eine gute Bewegung, aktuell nur bedingt erzielt werden, da der Fahrer zwischen zwei extrem unterschiedlichen Fahrpositionen wechselt.

Ein weiterer Nachteil besteht darin, dass der Schwenkbereich des Drehadapters dadurch limitiert ist, dass das Nutzfahrzeug trotz der Beobachtung der hinteren Arbeitsgeräte weiter über die Pedalerie und das Lenkrad verkehrssicher gesteuert werden muss. Um diesen Ansprüchen gerecht zu werden, muss der Fahrzeugführer eine Zwangshaltung einnehmen, welche unweigerlich zu einer Torsion des gesamten Körpers führt. Wissenschaftliche Untersuchungen zeigen, dass eine derart verdrehte Zwangshaltung insbesondere unter Schwingungsbelastung zur Schädigung der Körperstrukturen führen kann, speziell wenn der Körper nicht ausreichend gut unterstützt wird. Zudem steht fest, dass die Belastung der Wirbelsäule durch eine gute Abstützung über das Rückenlehnenteil signifikant reduziert werden kann.

Ein gattungsgemässer Fahrzeugsitz ist aus der GB2453165A bekannt.

Es ist Aufgabe der Erfindung, einem Fahrzeugführer einen verbesserten Sitzkomfort zu bieten, um speziell ein landwirtschaftliches Nutzfahrzeug betriebssicherer und insbesondere verkehrssicherer führen zu können. Durch eine Entlastung der Körperstrukturen wird eine vorzeitige Ermüdung verhindert und damit die Arbeitseffizienz erhöht.

Die Aufgabe der Erfindung wird von einem Fahrzeugsitz mit den Merkmalen des Anspruchs 1 gelöst.

Vorteilhafter Weise kann durch die derart angeordnete zusätzliche Fahrzeugführerrumpfabstützeinrichtung der Fahrzeugführer während einer Zwangshaltungseinnahme, insbesondere der vorstehend beschrieben seitlich oder rückwärtig ausgerichteten Sitzarbeitshaltung, außerordentlich gut entlastet werden. Und vorzugsweise zwar nur dann, wenn es erforderlich ist, steht die zusätzliche Fahrzeugführerrumpfabstützeinrichtung zur Verfügung. Ansonsten, etwa in einer vorwärts ausgerichteten Fahrposition, stört die zusätzliche Fahrzeugführerrumpfabstützeinrichtung nicht, da sie in ihrer Ausgangslage verlagert bleibt, in welcher sie vorteilhafter Weise als Rückenlehnenverlängerungseinrichtung ausgestaltet ist.

Die zusätzliche Fahrzeugführerrumpfabstützeinrichtung ist an dem Rückenlehnenteil so angeordnet, um die zusätzliche Fahrzeugführerrumpfabstützeinrichtung von einer etwa mittigen Ausgangslage in eine außermittige zusätzliche Rumpfabstützlage verlagern zu können, so dass ein Arbeitsbereich seitlich um den Fahrzeugsitz herum von der zusätzlichen Fahrzeugführerrumpfabstützeinrichtung zumindest dauerhaft nicht blockiert ist.

Der Begriff "Rückenlehnenverlängerungseinrichtung" beschreibt im Sinne der Erfindung einen oberen Teil des Rückenlehnenteils, mittels welchem der Fahrzeugführer im Wesentlichen im Bereich seines Rumpfes gestützt werden kann.

Es versteht sich, dass die Rückenlehnenverlängerungseinrichtung vielfältig ausgestaltet sein kann. Eine baulich einfache und damit bevorzugte Ausführungsvariante sieht vor, dass die Rückenverlängerungseinrichtung so ausgestaltet ist, dass sie gleichzeitig die zusätzliche Fahrzeugführerrumpfabstützeinrichtung abbilden kann.

Der Begriff "zusätzliche Fahrzeugführerrumpfabstützeinrichtung" beschreibt im Sinne der Erfindung eine lediglich temporär vorgehaltene Einrichtung zur zusätzlichen Rumpfabstützung des Fahrzeugführers während einer am Fahrzeugsitz eingenommen Zwangshaltung, insbesondere eine seitlich oder rückwärtig gerichtete Arbeitshaltung.

In vorliegendem Zusammenhang beschreibt die Begrifflichkeit "Rumpf" anatomisch den zentralen Bereich eines menschlichen Körpers und der Rumpf umfasst den Brustkorb, den Bauch, den Rücken sowie das Becken des menschlichen Körpers.

Insofern ist es vorteilhaft, wenn die zusätzliche Fahrzeugführerrumpfabstützeinrichtung eine Anlagefläche für einen Rücken- und/oder Schulterbereich eines Fahrzeugführers umfasst, wobei die Anlagefläche vorteilhafter Weise ergonomisch geformt ist, um der menschlichen Körperanatomie besonders gut zu entsprechen. Erst dies fördert die Akzeptanz beim Fahrzeugführer. Zumal ist der Körper des Fahrzeugführers durch eine derartige Anlagefläche vor Verletzungen gut geschützt, da es speziell im Einsatz mit landwirtschaftlichen Nutzfahrzeugen im Arbeitsbetrieb auf dem Acker oftmals seht rau zugeht und der Fahrzeugführer hierbei für jede gezielte Rumpfabstützung dankbar ist.

Mit dem Begriff "fahrzeugsitzfreier Rumpfabstützbereich" ist im Sinne der Erfindung ein Bereich am Fahrzeugsitz beschrieben, in welchem permanente Rumpfabstützeinrichtungen des Fahrzeugsitzes nicht sinnvoll dauerhaft angeordnet sein können, da sie im normalen Fahrbetrieb zu sehr störend auf den Fahrzeugführer wirken würden. Der vorliegende fahrzeugsitzfreie Rumpfabstützbereich liegt hierbei einerseits im Wesentlichen im oberen Drittel des Rückenlehnenteils, also oberhalb der halben Höhe des Rückenlehnenteils bzw. oberhalb einer Armlehne und damit im unmittelbaren seitlichen bzw. rückwärtigen Sichtbereich des Fahrzeugführers. Er kann auch bevorzugt oberhalb des oberen Drittels liegen, je nachdem, für welchen Zweck die zusätzliche Fahrzeugführerrumpfabstützeinrichtung vorgesehen ist.

Allein deshalb ist dieser fahrzeugsitzfreie Rumpfabstützbereich zumindest im normalen Vorwärtsfahrbetrieb unbedingt freizuhalten. Demnach ist er nicht mit einem herkömmlichen Rumpfabstützbereich zu verwechseln, in welchem etwa eine Armlehneneinrichtung eines Fahrzeugsitzes temporär hineingeschwenkt werden kann, auf welcher der Fahrzeugführer dann den Arm zur Entlastung ablegen kann. Andererseits befindet sich der fahrzeugsitzfreie Rumpfabstützbereich im Sinne der Erfindung außermittig des Rückenlehnenteils. Allein hierdurch ist er mit einem herkömmlichen Rumpfabstützbereich nicht zu verwechseln, in welchem eine Rückenteilverlängerungseinrichtung platziert ist. Erst recht nicht, da der fahrzeugsitzfreie Rumpfabstützbereich zudem vor dem Rückenlehnenteil und seitlich hiervon angeordnet ist. Insofern ist der vorliegende fahrzeugsitzfreie Rumpfabstützbereich auch oberhalb des Sitzteils und seitlich am Sitzteil des Fahrzeugsitzes vorgesehen.

Die Beschreibung "seitlich oder rückwärtig ausgerichtete Sitzarbeitshaltung" formuliert vorliegend eine Zwangshaltung des Fahrzeugführers bezüglich einer Oberkörperdrehung, um hierbei einen rückseitigen Arbeitsbereich, insbesondere hinter dem landwirtschaftlichen Nutzfahrzeug liegend, besser beobachten zu können bzw. seitlich hinten angeordnete Bedienelemente besser bedienen zu können.

An dieser Stelle sei darauf hingewiesen, dass der vorliegende erfinderische Fahrzeugsitz nicht nur hinsichtlich eines Fahrzeugführers vorteilhaft eingesetzt werden kann. Vielmehr ist der erfindungsgemäße Fahrzeugsitz nahezu in jedem Anwendungsbereich einsetzbar, in welchem im Umfeld des Fahrzeugsitzes zumindest temporär eine zusätzliche Rumpfabstützeinrichtung bereitgestellt werden soll.

Die zusätzliche Fahrzeugführerrumpfabstützeinrichtung kann besonders leicht verwendet werden, wenn die zusätzliche Fahrzeugführerrumpfabstützeinrichtung mittels einer Druckbetätigungseinrichtung an einem Polsterteil des Rückenlehnenteils betätigbar an dem Rückenlehnenteil angeordnet ist, oder auch an jeder anderen Stelle.

Es versteht sich, dass die zusätzliche Fahrzeugführerrumpfabstützeinrichtung konstruktiv in vielfältiger Weise verschiebbar gelagert sein kann. Eine erste diesbezüglich besonders vorteilhafte Ausführungsvariante sieht vor, dass die zusätzliche Fahrzeugführerrumpfabstützeinrichtung eine Linearführungseinrichtung zum im Wesentlichen horizontalen Verschieben der zusätzlichen Fahrzeugführerrumpfabstützeinrichtung entlang der Horizontalachse aufweist.

Eine Verwendung der zusätzlichen Fahrzeugführerrumpfabstützeinrichtung kann besonders komfortabel gestaltet werden, wenn die zusätzliche Fahrzeugführerrumpfabstützeinrichtung eine federkraftbetriebene Linearführungseinrichtung aufweist, mittels welcher die zusätzliche Fahrzeugführerrumpfabstützeinrichtung automatisch verlagerbar ist.

Es versteht sich, dass eine Verlagerung der zusätzlichen Fahrzeugführerrumpfabstützeinrichtung mechanisch, hydraulisch, pneumatisch oder auch mittels Elektromotoren erfolgen kann, je nachdem welche technischen Voraussetzungen an dem jeweiligen Nutzfahrzeug zur Verfügung stehen.

Um die zusätzliche Fahrzeugführerrumpfabstützeinrichtung auch weiter außerhalb seitlich und/oder vor dem Rückenlehnenteil optimal platzieren zu können, ist es vorteilhaft, wenn die Linearführungseinrichtung einen Verstellweg aufweist, welcher seitlich über das Rückenlehnenteil hinausragt.

Die zusätzliche Fahrzeugführerrumpfabstützeinrichtung kann auf einem sehr direkten Weg und damit vorteilhafter Weise auch bauraumsparend in den ansonsten fahrzeugsitzfreien Rumpfabstützbereich verlagert werden, wenn ein Verstellweg der zusätzlichen Fahrzeugführerrumpfabstützeinrichtung im Wesentlichen quer zu einem Höhenverstellweg der Rückenlehnenverlängerungseinrichtung angeordnet ist. Insofern unterscheidet sich der Verstellweg der zusätzlichen Fahrzeugführerrumpfabstützeinrichtung von einem herkömmlichen Höhenverstellweg einer Rückenlehnenverlängerungseinrichtung.

Besonders stabil kann die zusätzliche Fahrzeugführerrumpfabstützeinrichtung entlang des Verstellweges geführt und gehalten werden, wenn die Linearführungseinrichtung ein an Rollenelemente geführtes und gelagertes biegesteifes Flachbandelement aufweist.

Ein derartiges biegesteifes Flachbandelement kann beispielsweise sehr stabil aus Metall, aber auch ausreichend stabil aus einem Kunststoff hergestellt sein, wobei letzteres oftmals leichter und geräuschärmer abrollend ausgelegt sein kann.

Vorzugsweise weist die Linearführungseinrichtung mindestens vier derartige Rollenelemente auf, wodurch das Flachbandelement besonders gut gestützt bzw. gelagert an der Linearführungseinrichtung gehaltert werden kann. Es versteht sich, dass auch weniger oder mehr Rollenelemente verwendet werden können, wenn die Linearführungseinrichtung zusätzliche Stützelemente umfasst.

Kumulativ oder alternativ kann die Linearführungseinrichtung auch über Gleitflächeneinrichtungen umfassen, an welchen das Flachbandelement entlang gleiten kann.

Sind die Rollenelemente außermittig oberhalb des Rückenlehnenteils angeordnet, kann eine außerordentlich gute Kräfteeinleitung von der zusätzlichen Fahrzeugführerrumpfabstützeinrichtung in die Linearführungseinrichtung gewährleistet werden.

Eine Betätigung der zusätzlichen Fahrzeugführerrumpfabstützeinrichtung erfolgt hierbei vorzugsweise mit einer entsprechenden Ellbogenbewegung des Fahrzeugführers, indem die zusätzliche Fahrzeugführerrumpfabstützeinrichtung mittels des Ellbogens in die zusätzliche Rumpfabstützlage in dem ansonsten fahrzeugsitzfreien Rumpfabstützbereich verlagert wird. Eine Rückverlagerung der zusätzlichen Fahrzeugführerrumpfabstützeinrichtung erfolgt idealerweise durch einen manuellen Anschubsimpuls und mit Hilfe einer Federkraftunterstützung.

Daneben sieht eine alternative, nicht beanspruchte, aber nicht minder vorteilhafte Ausführungsvariante eine Rückenlehnenverlängerungseinrichtung vor, welche um eine Hochachse herum rotierbar an dem Rückenlehnenteil angeordnet ist, um die zusätzliche Fahrzeugführerrumpfabstützeinrichtung mit einer alternativen Konstruktion von einer etwa mittigen Ausgangslage in eine außermittige zusätzliche Rumpfabstützlage verschieben zu können. Insofern wird die Aufgabe der Erfindung bereits durch diese Merkmalskombination unabhängig von den anderen hier beschriebenen Merkmalen gelöst.

Ist die zusätzliche, nicht beanspruchte Fahrzeugführerrumpfabstützeinrichtung um eine Hochachse herum rotierbar an dem Rückenlehnteil angeordnet, um die zusätzliche Fahrzeugführerrumpfabstützeinrichtung von einer etwa mittigen Ausgangslage in eine außermittige zusätzliche Rumpfabstützlage schwenken zu können, ist auch hierbei ein Arbeitsbereich seitlich um den Fahrzeugsitz herum von der zusätzlichen Fahrzeugführerrumpfabstützeinrichtung zumindest dauerhaft nicht blockiert.

Darüber hinaus ist es vorteilhaft, wenn die zusätzliche, nicht beanspruchte Fahrzeugführerrumpfabstützeinrichtung eine Verstelleinrichtung zum Schwenken der zusätzlichen Fahrzeugführerrumpfabstützeinrichtung um eine Hochachse aufweist, wobei die Verstelleinrichtung mindestens zwei unterschiedliche Verstellmodi umfasst.

Eine vorteilhafte Ausführungsvariante sieht vor, dass die nicht beanspruchte Verstelleinrichtung einen Verstellweg mit einem ersten rastlosen Verstellwegsabschnitt umfassend einen Verstellwinkel zwischen 0°und 220°, vorzugsweise zwischen 0°und 180°, aufweist, wobei dies ein erster Verstellmodus der Verstelleinrichtung ist. Ein derartiger rastloser Verstellwegsabschnitt ermöglicht in Positionen, in welchen eine Rumpfabstützleistung hinsichtlich der zusätzlichen Fahrzeugführerrumpfabstützeinrichtung noch nicht erforderlich ist, eine im Wesentlichen uneingeschränkte schnelle Verstellung. Insofern ist ein vorteilhafter erster Verstellmodus bereitgestellt.

Weist die nicht beanspruchte Verstelleinrichtung als wenigstens einen weiteren Verstellmodus einen Verstellweg mit wenigstens einem weiteren gerasteten Verstellwegsabschnitt umfassend einen Verstellwinkel zwischen 220° und 290°, vorzugsweise zwischen 180° und 270°, auf, kann die zusätzliche Fahrzeugführerrumpfabstützeinrichtung hinsichtlich der außermittigen zusätzlichen Rumpfabstützlage vorteilhaft auf die Bedürfnisse des jeweiligen Fahrzeugführers eingestellt werden. Insofern ist ein vorteilhafter zweiter Verstellmodus bereitgestellt.

Der Aufbau der vorliegenden zusätzlichen Fahrzeugführerrumpfabstützeinrichtung kann weiter verbessert werden, wenn die zusätzliche Fahrzeugführerrumpfabstützeinrichtung eine erste Anlagefläche und eine zweite Anlagefläche für den Fahrzeugführer aufweist, wobei die zweite Anlagefläche der ersten Anlagefläche im Wesentlichen gegenüberliegend an der zusätzlichen Fahrzeugführerrumpfabstützeinrichtung angeordnet ist.

Vorteilhafter Weise befindet sich die Rumpfabstützkontur der zusätzlichen Fahrzeugführerrumpfabstützeinrichtung in einem Normalrumpfabstützbetriebszustand des Fahrzeugsitzes hinten an der Rückenlehnenverlängerungseinrichtung. Beide Anlageflächen sind an die anatomischen und haltungsbedingten Gegebenheiten angepasst.

Vorteilhafter Weise ist die zusätzliche Fahrzeugführerrumpfabstützeinrichtung am oberen Ende des Rückenlehnenteils verlagerbar angeordnet, wodurch die zusätzliche Fahrzeugführerrumpfabstützeinrichtung gegebenenfalls auch an herkömmlichen Fahrzeugsitzen nachrüstbar ist. Zudem können bisher übliche Breitenmaße eines Fahrzeugsitzes auch hinsichtlich des erfindungsgemäßen Fahrzeugsitzes eingehalten werden.

Die Aufgabe der Erfindung wird auch von einem Nutzfahrzeug, insbesondere von einem landwirtschaftlichen Nutzfahrzeug, mit einem erfindungsgemäßen Fahrzeugsitz für einen Fahrzeugführer nach einem der hier beschriebenen Merkmale gelöst.

Gerade ein Fahrzeugsitz mit der erfindungsgemäßen zusätzlichen Fahrzeugführerrumpfabstützeinrichtung entlastet einen Fahrzeugführer eines Nutzfahrzeugs erheblich.

Weitere Vorteile, Ziele und Eigenschaften vorliegender Erfindung werden anhand anliegender Zeichnung und nachfolgender Beschreibung erläutert, in welchen beispielhaft Fahrzeugsitze mit jeweils einer erfindungsgemäßen zusätzlichen Fahrzeugführerrumpfabstützeinrichtung dargestellt und beschrieben ist. In der Zeichnung zeigen:
- Figur 1A: schematisch eine perspektivische Ansicht eines sich in einem Normalbetriebszustand befindlichen Fahrzeugsitzes mit einem Sitzteil, mit einem Rückenlehnenteil und mit einer Rückenlehnenverlängerungseinrichtung umfassend eine zusätzliche Fahrzeugführerrumpfabstützeinrichtung;
- Figur 1B: schematisch eine Rückseitenansicht der die zusätzliche Fahrzeugführerrumpfabstützeinrichtung umfassenden Rückenverlängerungseinrichtung aus der Figur 1A;
- Figur 1C: schematisch eine Vorderansicht des Fahrzeugsitzes aus den Figuren 1A und 1B in einem Sonderabstützbetriebszustand;
- Figur 1D: schematisch eine Rückseitenansicht des Fahrzeugsitzes aus den Figuren 1A bis 1C in dem Sonderabstützbetriebszustand;
- Figur 2A: schematisch eine Aufsicht einer alternativen, nicht beanspruchten zusätzlichen Fahrzeugführerrumpfabstützeinrichtung wieder in Gestalt einer Rückenlehnenverlängerungseinrichtung an einem Fahrzeugsitz sowohl in einem Normalabstützbetriebszustand als auch in einem Sonderabstützbetriebszustand;
- Figur 2B: schematisch eine Vorderansicht des Fahrzeugsitzes aus der Figur 2A in dem Normalabstützbetriebszustand;
- Figur 2C: schematisch eine weitere Vorderansicht des Fahrzeugsitzes aus den Figuren 2A und 2B in dem Sonderabstützbetriebszustand; und
- Figur 2D: schematisch eine Aufsicht des Fahrzeugsitzes aus den Figuren 2A bis 2C mit dargestelltem Verstellweg der zusätzlichen Fahrzeugführerrumpfabstützeinrichtung.

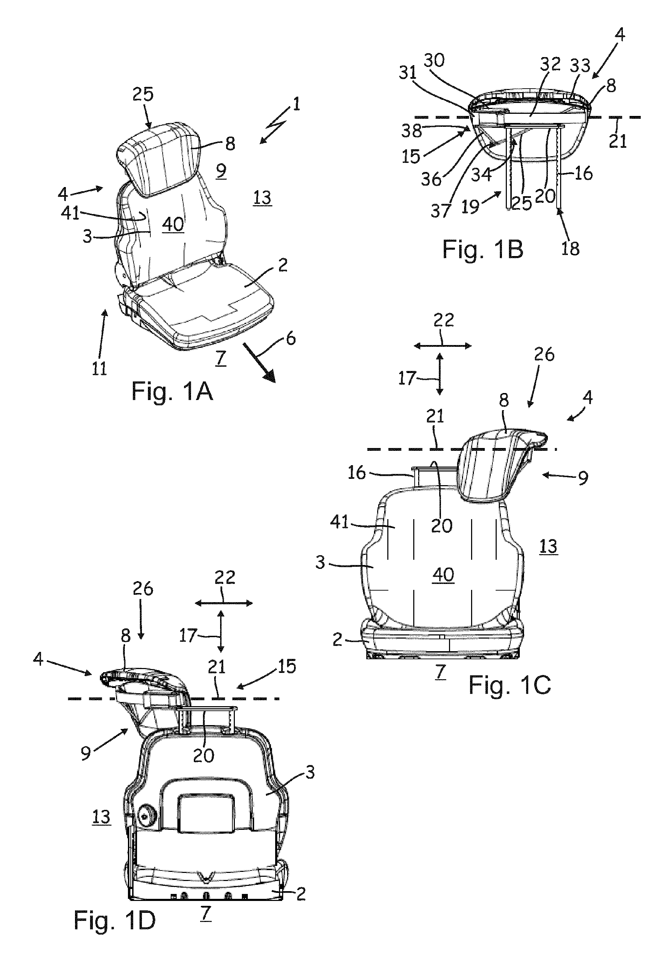

Der in den Figuren 1A bis 1D gezeigte Fahrzeugsitz 1 für ein landwirtschaftliches Nutzfahrzeug (hier nicht gezeigt) weist ein Sitzteil 2, ein Rückenlehnenteil 3 und eine Rückenlehnenverlängerungseinrichtung 4 auf, die mittig oberhalb des Rückenlehnenteils 3 angeordnet ist. Der Fahrzeugsitz 1 ist mit seinem Sitzteil 2 in Vorwärtsfahrtrichtung 6 unterseitig 7 über eine hier nicht dargestellte gegebenenfalls eine Federeinrichtung umfassende Konsole an einem Kabinenboden (hier nicht gezeigt) des landwirtschaftlichen Nutzfahrzeugs befestigt.

Der Fahrzeugsitz 1 weist erfindungsgemäß außerhalb des Sitzteils 2 und des Rückenlehnenteils 3 eine zusätzliche Fahrzeugführerrumpfabstützeinrichtung 8 baulich besonders einfach in Gestalt der Rückenlehnenverlängerungseinrichtung 4 aufweist, welche zumindest teilweise in einem ansonsten fahrzeugsitzfreien Rumpfabstützbereich 9 oberhalb und vor dem Rückenlehnenteil 3 und seitlich des Rückenlehnenteils 3 temporär anordenbar ist, um einen auf dem Fahrzeugsitz 1 sitzenden Fahrzeugführer (hier nicht gezeigt) während einer seitlich oder rückwärtig ausgerichteten Sitzarbeitshaltung zumindest in Höhe seines Schulter- und Rückenbereichs außermittig seitlich des Rückenlehnenteils 3 abzustützen.

In der Darstellung nach der Figur 1A ist der Fahrzeugsitz 1 in einem Normalabstützbetriebszustand 11 und in den Darstellungen nach den Figuren 1C und 1D jeweils in einem Sonderabstützbetriebszustand 12 gezeigt.

Die zusätzliche Fahrzeugführerrumpfabstützeinrichtung 8 kann nach links 13 außen in einen ansonsten fahrzeugfreien Rumpfabstützbereich 9 translatorisch verschoben werden, um dort den Fahrzeugführer während einer seitlich oder rückwärtig ausgerichteten Zwangshaltung besonders vorteilhaft abzustützen.

Hierzu weist die zusätzliche Fahrzeugführerrumpfabstützeinrichtung 8 eine Linearführungseinrichtung 15 (siehe insbesondere Figuren 1B und 1D) auf, welche von einer Halteeinrichtung 16 der Rückenverlängerungseinrichtung 4 getragen wird.

Die Halteeinrichtung 16 ist an dem Rückenlehnenteil 3 des Fahrzeugsitzes 1 derart gehaltert, dass die Rückenverlängerungseinrichtung 4 entlang eines Höhenverstellweges 17 gegenüber dem Rückenlehnenteil 3 in der Höhe verstellbar ist. Insofern kann in diesem Ausführungsbeispiel hierüber die Rückenlehnenverlängerungseinrichtung 4 auf die Größe des Fahrzeugführers optimal eingestellt werden. Die Halteeinrichtung 16 weist zwei Vertikalstreben 18 (hier nur exemplarisch beziffert) auf, die mit ihren unteren Enden 19 an einer Führungseinrichtung (nicht gezeigt) innerhalb des Rückenlehnenteils 3 befestigt werden können. Oberseitig weist die Halteeinrichtung 16 eine zwischen den beiden Vertikalstreben 18 verlaufende Horizontalstrebe 20 auf.

Links 13 an der Halteeinrichtung 16 und endseitig dieser Horizontalstrebe 20 ist die Linearführungseinrichtung 15 derart angeordnet, dass mit ihr die Rückenlehnenverlängerungseinrichtung 4 und somit auch die zusätzliche Fahrzeugführerrumpfabstützeinrichtung 8 entlang einer geometrischen Horizontalachse 21 in Richtung eines Querverstellweges 22 translatorisch verschiebbar an dem Rückenlehnenteil 3 gelagert ist, um insbesondere die zusätzliche Fahrzeugführerrumpfabstützeinrichtung 8 von einer etwa mittigen Ausgangslage 25 (siehe Figur 1A) in eine außermittige zusätzliche Rumpfabstützlage 26 (siehe Figuren 1C und 1D) horizontal verschieben zu können.

Der Querverstellweg 22 verläuft hierbei im Wesentlichen rechtwinkelig quer zum Höhenverstellweg 17 und er ragt hierbei links 13 bis seitlich über das Rückenlehnenteil 3 hinaus, sodass die zusätzliche Fahrzeugführerrumpfabstützeinrichtung 8 bis in den ansonsten fahrzeugsitzfreien Rumpfabstützbereich 9 hinein verlagert werden kann.

Die Linearführungseinrichtung 15 umfasst eine Rollenhalterungseinrichtung 30 mit vier Rollenelementen 31 (nur exemplarisch beziffert), an welchen geführt ein biegesteifes Flachbandelement 32 entlang der geometrischen Horizontalachse 21 translatorisch zwischen den beiden Abstützbetriebszuständen 11 und 12 verlagert werden kann.

Die Rollenhalterungseinrichtung 30 ist oberseitig an der Halteeinrichtung 16 des Rückenlehnenteils 3 angeordnet, wobei die einzelnen Rollenelemente 31 außermittig oberhalb des Rückenlehnenteils 3 angeordnet sind.

Hierbei sind jeweils zwei entlang der Horizontalachse 21 voneinander beabstandete Rollenelemente 31 auf einer ersten Seite des biegesteifen Flachbandelements 32 angeordnet, während zwei weitere ebenfalls entlang der Horizontalachse 21 voneinander beabstandete Rollenelemente 31 auf einer zweiten Seite des biegesteifen Flachbandelements 32 angeordnet sind, wobei sich die erste Seite und die zweite Seite direkt gegenüberliegen.

Die Rollenelemente 31 weisen jeweils eine Höhe entlang ihrer Drehachse auf, die im Wesentlichen der Breite des biegesteifen Flachbandelements 32 entspricht, wodurch das biegesteife Flachbandelement 32 besonders verdrehsicher an der Rollenhalterungseinrichtung 30 gelagert ist.

Jeweils zwei sich quer zur Horizontalachse 21 direkt gegenüberliegende Rollenelemente sind nur durch einen schmalen Spalt (hier nicht explizit beziffert) derart voneinander beabstandet, dass das biegesteife Flachbandelement 32 nahezu spielfrei zwischen den diesbezüglichen Rollenelementen 31 hindurchgeführt ist, um eine straffe Lagerung des Flachbandelements 32 an der Rollenhalterungseinrichtung 30 zu gewährleisten.

All dies trägt einzeln und insbesondere kumuliert dazu bei, dass die zusätzliche Fahrzeugführerrumpfabstützeinrichtung 8 besonders gut geführt an dem Fahrzeugsitz 1 gelagert ist.

Das biegesteife Flachbandelement 32 ist an einem Rahmenteil 33 der zusätzlichen Fahrzeugführerrumpfabstützeinrichtung 8 befestigt, an welchem ebenfalls das biegesteife Flachbandelement 32 angeordnet ist.

Das biegesteife Flachbandelement 32 bildet auch eine breitere Querstrebe des Rahmenteils 3, so dass das Rahmenteil 33 hierdurch sogleich vorteilhaft verstärkt ist.

Darüber hinaus ist an der zusätzlichen Fahrzeugführerrumpfabstützeinrichtung 8 noch ein Verstärkungselement 34 vorhanden, welches den unteren flexibleren Teil der zusätzlichen Fahrzeugführerrumpfabstützeinrichtung 8 insbesondere im Sonderabstützbetriebszustand 12 vorteilhaft verstärkt.

Das Verstärkungselement 34 ist mit seiner längeren Stabseite 35 mit dem Rahmenteil 33 und mit seiner kürzeren Stabseite 36 ebenfalls mit dem Rahmenteil 33 verbunden, wobei das Verstärkungselement 34 einen Knickbereich 37 aufweist, um eine geknickte Lage 38 zu realisieren.

Eine Betätigung der zusätzlichen Fahrzeugführerrumpfabstützeinrichtung 8 erfolgt hierbei mittels Körperkraft mit einer entsprechenden Ellbogenbewegung des Fahrzeugführers, indem er die zusätzliche Fahrzeugführerrumpfabstützeinrichtung 8 mit dem rechten Ellbogen bzw. dem rechten hinteren Oberarmbereich nach außen in den ansonsten fahrzeugsitzfreien Rumpfabstützbereich 9 hinein drückt. Eine Rückstellung kann mittels einer entsprechenden Bewegung des linken Ellbogenbereichs erfolgen. Vorzugsweise ist die erforderliche Verstellkraft derart gewählt, dass die Position der zusätzlichen Fahrzeugführerrumpfabstützeinrichtung 8 in nahezu beliebigen Lagen gehalten werden kann, ohne eine Betätigungskraft negativ zu beeinflussen.

Eine Aktivierung der zusätzlichen Fahrzeugführerrumpfabstützeinrichtung 8 kann alternativ auch mittels einer hier nicht näher gezeigten Druckbetätigungseinrichtung an einem Polsterteil 40 des Rückenlehnenteils 3 erfolgen. Vorzugsweise befindet sich diese Druckbetätigungseinrichtung an einem dem ansonsten fahrzeugsitzfreien Rumpfabstützbereich 9 abgewandten Rückenlehnenteilseitenbereich 41 des Fahrzeugsitzes 1.

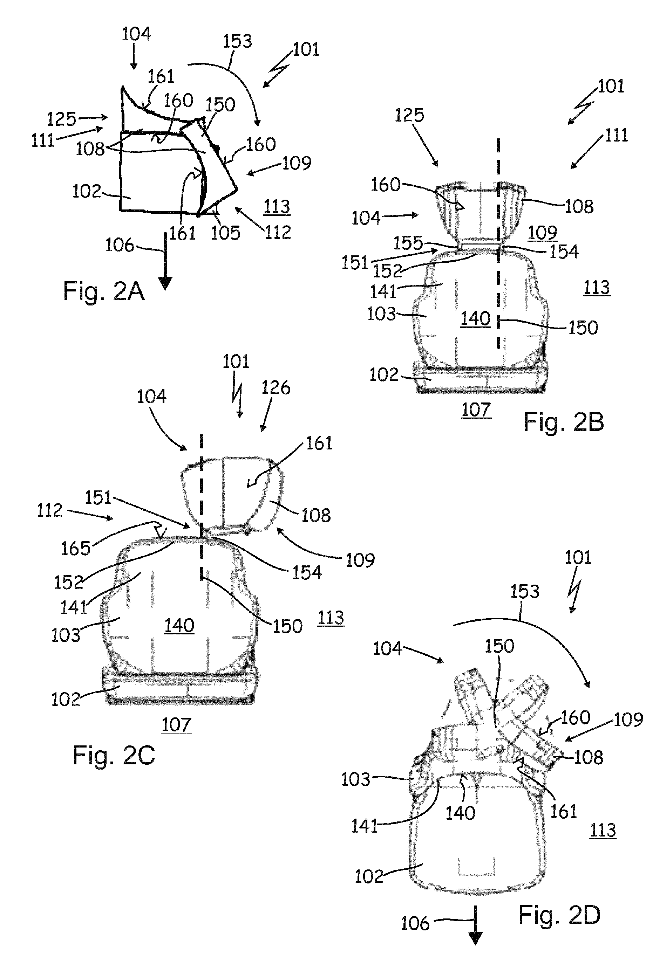

Der in den Figuren 2A bis 2D gezeigte, nicht beanspruchte Fahrzeugsitz 101 für ein landwirtschaftliches Nutzfahrzeug (hier nicht gezeigt) weist ein Sitzteil 102, ein Rückenlehnenteil 103 und eine Armlehneneinrichtung 105 (nur in Figur 2A gezeigt) auf, die links 113 außen seitlich an dem Rückenlehnenteil 103 in Bezug auf eine Vorwärtsfahrtrichtung 106 des landwirtschaftlichen Nutzfahrzeugs angeordnet ist. Der Fahrzeugsitz 101 ist mit seinem Sitzteil 102 unterseitig 107 über eine hier nicht dargestellte Konsole an einem Kabinenboden (hier nicht gezeigt) des landwirtschaftlichen Nutzfahrzeugs befestigt.

Der Fahrzeugsitz 101 weist außerhalb des Sitzteils 102 und des Rückenlehnenteils 103 eine zusätzliche Fahrzeugführerrumpfabstützeinrichtung 108 auf, welche zumindest teilweise in einem ansonsten fahrzeugsitzfreien Rumpfabstützbereich 109 oberhalb und vor dem Rückenlehnenteil 103 und seitlich des Rückenlehnenteils 103 temporär anordenbar ist, um einen auf dem Fahrzeugsitz 101 sitzenden Fahrzeugführer während einer seitlich oder rückwärtig ausgerichteten Sitzarbeitshaltung zumindest in Höhe seines Schulterbereichs außermittig seitlich des Rückenlehnenteils 103 abzustützen, wobei die zusätzliche Fahrzeugführerrumpfabstützeinrichtung 108 eine Rückenlehnenverlängerungseinrichtung 104 umfasst.

Der Fahrzeugsitz 101 umfasst in diesem Ausführungsbeispiel erfindungsgemäß eine zusätzliche Fahrzeugführerrumpfabstützeinrichtung 108, welche an dem Rückenlehnenteil 103 drehbar um eine Hochachse 150 befestigt ist. Hierzu ist die zusätzliche Fahrzeugführerrumpfabstützeinrichtung 108 mit einer Verstelleinrichtung 151 ausgerüstet, welche am oberen Ende 152 des Rückenlehnenteils 103 angeordnet ist, so dass die zusätzliche Fahrzeugführerrumpfabstützeinrichtung 108 über einen Verstellweg 153 von einer etwa mittigen Ausgangslage 125 in eine außermittige zusätzliche Rumpfabstützlage 126 hinein verlagert werden kann. Die außermittige Rumpfabstützlage 126 befindet sich in dem ansonsten fahrzeugsitzfreien Rumpfabstützbereich 109.

Eine Verlagerung der zusätzlichen Fahrzeugführerrumpfabstützeinrichtung 108 kann besonders komfortabel erfolgen, wenn die Verstelleinrichtung 151 federkraftunterstützt ist. Ein hierfür geeignetes Spannfederelement (in diesem Ausführungsbeispiel nicht gezeigt) kann beispielsweise innerhalb des Rückenlehnenteils 103 und/oder der Rückenlehnenverlängerungseinrichtung 104 untergebracht sein.

Insbesondere gemäß der Darstellung nach der Figur 2A ist die zusätzliche Fahrzeugführerrumpfabstützeinrichtung 108 zum einen in einem Normalabstützbetriebszustand 111 des Fahrzeugsitzes 101 im Wesentlichen hinter dem Sitzteil 102 angeordnet gezeigt.

In einem Sonderrumpfabstützbetriebszustand 112 des Fahrzeugsitzes 101 ist die zusätzliche Fahrzeugführerrumpfabstützeinrichtung 108 zum anderen vorteilhafter Weise in den ansonsten fahrzeugsitzfreien Rumpfabstützbereich 109 verlagert, um einen auf dem Fahrzeugsitz 101 sitzenden Fahrzeugführer (hier nicht gezeigt) während einer seitlich oder rückwärtig ausgerichteten Sitzarbeitshaltung zumindest in Höhe seines Schulterbereichs außermittig links 113 außen und zwar seitlich des Sitzteils 102 abzustützen, wie eingangs bereits beschrieben.

Zum Verstellen der zusätzlichen Fahrzeugführerrumpfabstützeinrichtung 108 beim seitlich verdrehten Sitzen wird etwa mit dem Ellbogen des Fahrzeugführers eine Druckbetätigungseinrichtung (hier nicht gezeigt) in einem Polsterteil 140 des Rückenlehnenteils 103 ausgelöst, wodurch die zusätzliche Fahrzeugführerrumpfabstützeinrichtung 108 nach hinten klappt.

Hierbei dreht die zusätzliche Fahrzeugführerrumpfabstützeinrichtung 108 über ein linkes Drehhalterungselement 154 der Verstelleinrichtung 151 und klappt seitlich des Rückenlehnenteils 103 nach vorne in den ansonsten fahrzeugsitzfreien Rumpfabstützbereich 109 hinein.

Die zusätzliche Fahrzeugführerrumpfabstützeinrichtung 108 wird in diesem Ausführungsbeispiel also über einen Armdruck oder dergleichen in einem dem ansonsten fahrzeugsitzfreien Rumpfabstützbereich 109 abgewandten Rückenlehnenteilseitenbereich 141 entriegelt und mittels einer Federkraft ca. um 180° entlang des Verstellweges 153 geschwenkt. Danach folgen gerastete Einstellungsmöglichkeiten bis ca. 240°. Bei einem Überhub von ca. 270° fällt die zusätzliche Fahrzeugführerrumpfabstützeinrichtung 108 wieder in ihre mittige Ausgangslage 125 zurück, wo sie mit einem rechten Halterungselement 155 (siehe Figur 2B) wieder an dem Rückenlehnenteil 103 einrasten kann und somit erneut in der mittige Ausgangslage 125 festgelegt ist. Der Überhub kann hierbei händisch erfolgen.

Die zusätzliche Fahrzeugführerrumpfabstützeinrichtung 108 verfügt des Weiteren einerseits über eine erste Anlagefläche 160 zum Unterstützen einer Stützfunktion in dem Normalabstützbetriebszustand 111 und eine zweite Anlagefläche 161 zum Unterstützen der zusätzlichen Rumpfabstützfunktion in dem Sonderabstützbetriebszustand 112, wobei die zweite Anlagefläche 161 der ersten Anlagefläche 160 im Wesentlichen gegenüberliegend an der zusätzliche Fahrzeugführerrumpfabstützeinrichtung 108 angeordnet ist. Hierdurch kann die Doppelfunktion der Rückenlehnenverlängerungseinrichtung 104 besonders vorteilhaft ausgestaltet werden.

Die zweite Anlagefläche 161 ist im Normalabstützbetriebszustand 111 des Fahrzeugsitzes 101 rückseitig des Rückenlehnenteils 103 angeordnet. Im Sonderabstützbetriebszustand 112 des Fahrzeugsitzes 101 ist sie hingegen dem Fahrzeugführer zugewandt. Genau umgekehrt verhält es sich hinsichtlich der ersten Anlagefläche 160.

Mittels der verdrehbaren Rückenverlängerungseinrichtung 104 können vorteilhafter Weise zwei Rumpfabstützkonturen, nämlich einerseits die erste Rumpfabstützfläche 160 und andererseits die zweite Rumpfabstützfläche 161, zur optimalen Konturanpassung in den beiden Abstützbetriebszuständen 111 und 112 bereitgestellt werden. In dem Normalabstützbetriebszustand 111 hat der Fahrzeugführer eine optimale Rückenunterstützung speziell während einer vorwärts ausgerichteten Fahrsitzhaltung. Beim seitlich verdrehten Sitzen wird die Rückenverlängerungseinrichtung 104 erfindungsgemäß als zusätzliche Fahrzeugführerrumpfabstützeinrichtung 108 verwendet, so dass der Fahrzeugführer auch in der rückwärtig ausgerichteten Sitzarbeitshaltung optimal gestützt ist.

Das Verschwenken der Rückenverlängerungseinrichtung 104 als zusätzliche Fahrzeugführerrumpfabstützeinrichtung 108 erlaubt vorteilhafter Weise gleichzeitig eine Nutzung einer komfortoptimierten hinteren Armauflagefläche 165 im nun freien Bereich des Rückenlehnenteils 103 (siehe Figur 2C).

Eine Aktivierung der zusätzlichen Fahrzeugführerrumpfabstützeinrichtung erfolgt vorzugsweise automatisch interaktiv mittels einer auf das Rückenlehnenteil ausgeübten Körperkraft und damit vorteilhafter Weise ohne eine zusätzliche händisch initiierte Bedienelementeauslösung, wie vorstehend beschrieben. Eine Bedienung der zusätzlichen Fahrzeugführerrumpfabstützeinrichtung kann kumulativ oder alternativ auch mittels Bedienelemente erfolgen, welche idealerweise in einer linken Armlehneneinrichtung angeordnet sind.

### Bezugszeichenliste

- 1: Fahrzeugsitz
- 2: Sitzteil
- 3: Rückenlehnenteil
- 4: Rückenlehnenverlängerungseinrichtung
- 6: Vorwärtsfahrtrichtung
- 7: unterseitig
- 8: zusätzliche Fahrzeugführerrumpfabstützeinrichtung
- 9: ansonsten fahrzeugsitzfreier Rumpfabstützbereich
- 11: Normalabstützbetriebszustand
- 12: Sonderabstützbetriebszustand
- 13: links
- 15: Linearführungseinrichtung
- 16: Halteeinrichtung
- 17: Höhenverstellweg
- 18: Vertikalstreben
- 19: untere Enden
- 20: Horizontalstrebe
- 21: Horizontalachse
- 22: Querverstellweg
- 25: mittige Ausgangslage
- 26: außermittige zusätzliche Rumpfabstützlage
- 30: Rollenhalterungseinrichtung
- 31: Rollenelemente
- 32: biegesteifes Flachbandelement
- 33: Rahmenteil
- 34: Verstärkungselement
- 35: längere Stabseite
- 36: kürzere Stabseite
- 37: Knickbereich
- 38: geknickte Lage
- 40: Polsterteil
- 41: abgewandter Rückenlehnenteilseitenbereich

- 101: alternativer Fahrzeugsitz
- 102: Sitzteil
- 103: Rückenlehnenteil
- 104: Rückenlehnenverlängerungseinrichtung
- 105: Armlehneneinrichtung
- 106: Vorwärtsfahrtrichtung
- 107: unterseitig
- 108: zusätzliche Fahrzeugführerrumpfabstützeinrichtung
- 109: ansonsten fahrzeugsitzfreier Rumpfabstützbereich
- 111: Normalabstützbetriebszustand
- 112: Sonderabstützbetriebszustand
- 113: links
- 125: mittige Ausgangslage
- 126: außermittige zusätzliche Rumpfabstützlage
- 140: Polsterteil
- 141: abgewandter Rückenlehnenteilseitenbereich
- 150: Hochachse
- 151: Verstelleinrichtung
- 152: oberes Ende
- 153: Verstellweg
- 154: linkes Drehhalterungselement
- 155: rechtes Halterungselement
- 160: erste Anlagefläche
- 161: zweite Anlagefläche
- 165: hintere Armauflagefläche

## Patentansprüche

1. Fahrzeugsitz (1) mit einem Sitzteil (2) und mit einem Rückenlehnenteil (3) zum Stützen eines Fahrzeugführers in seiner Sitzposition auf dem Fahrzeugsitz (1),
**dadurch gekennzeichnet, dass**
der Fahrzeugsitz (1) eine außerhalb des Sitzteils (2) und des Rückenlehnenteils (3) anordenbare zusätzliche Fahrzeugführerrumpfabstützeinrichtung (8) zum Abstützen eines Schulterbereichs des Fahrzeugführers aufweist, welche zumindest teilweise in einem ansonsten fahrzeugsitzfreien Rumpfabstützbereich (9) vor dem Rückenlehnenteil (3) sowie seitlich und/oder oberhalb des Rückenlehnenteils (3) temporär anordenbar ist, um den auf dem Fahrzeugsitz (1) sitzenden Fahrzeugführer während einer seitlich oder rückwärtig ausgerichteten Sitzarbeitshaltung zumindest in Höhe seines Schulterbereichs außermittig seitlich des Rückenlehnenteils (3) abzustützen, wobei der Bereich seitlich um den Fahrzeugsitz (1) herum von der zusätzlichen Fahrzeugführerrumpfabstützeinrichtung (8) zumindest dauerhaft nicht blockiert ist und wobei die zusätzliche Fahrzeugführerrumpfabstützeinrichtung (8) eine Rückenlehnenverlängerungseinrichtung (4) umfasst, welche entlang einer Horizontalachse (21) translatorisch verschiebbar an dem Rückenlehnteil (3) angeordnet ist, um die zusätzliche Fahrzeugführerrumpfabstützeinrichtung (8) von einer etwa mittigen Ausgangslage (25) in eine außermittige zusätzliche Rumpfabstützlage (26) im Wesentlichen horizontal zu verschieben.

2. Fahrzeugsitz (1) nach Anspruch 1,
**dadurch gekennzeichnet, dass**
die zusätzliche Fahrzeugführerrumpfabstützeinrichtung (8) eine Linearführungseinrichtung (15) zum horizontalen Verschieben der zusätzlichen Fahrzeugführerrumpfabstützeinrichtung (8) entlang der Horizontalachse (21) aufweist.

3. Fahrzeugsitz (1) nach Anspruch 1 oder 2,
**dadurch gekennzeichnet, dass**
die zusätzliche Fahrzeugführerrumpfabstützeinrichtung (8) eine federkraftbetriebene Linearführungseinrichtung (15) aufweist, mittels welcher die zusätzliche Fahrzeugführerrumpfabstützeinrichtung (8) automatisiert verlagerbar ist.

4. Fahrzeugsitz (1) nach Anspruch 2 oder 3,
**dadurch gekennzeichnet, dass**
die Linearführungseinrichtung (15) einen Verstellweg (22) aufweist, welcher seitlich über das Rückenlehnenteil (3) hinausragt.

5. Fahrzeugsitz (1) nach einem der Ansprüche 2 bis 4,
**dadurch gekennzeichnet, dass**
die Linearführungsrichtung (15) ein an Rollenelemente (31) geführtes und gelagertes biegesteifes Flachbandelement (32) aufweist.

6. Fahrzeugsitz (1) nach Anspruch 5,
**dadurch gekennzeichnet, dass**
die Rollenelemente (31) außermittig oberhalb des Rückenlehnenteils (3) angeordnet sind.

7. Fahrzeugsitz (1) nach einem der Ansprüche 1 bis 6,
**dadurch gekennzeichnet, dass**
ein Verstellweg (22) der zusätzlichen Fahrzeugführerrumpfabstützeinrichtung (8) im Wesentlichen quer zu einem Höhenverstellweg (17) der Rückenlehnenverlängerungseinrichtung (4) angeordnet ist.

8. Fahrzeugsitz (1) nach einem der Ansprüche 1 bis 7,
**dadurch gekennzeichnet, dass**
die zusätzliche Fahrzeugführerrumpfabstützeinrichtung (8) mittels einer Druckbetätigungseinrichtung an einem Polsterteil (40) des Rückenlehnenteils (3) betätigbar an dem Rückenlehnenteil (3) angeordnet ist.

9. Nutzfahrzeug, insbesondere landwirtschaftliches Nutzfahrzeug, mit einem Fahrzeugsitz (1) für einen Fahrzeugführer,
**gekennzeichnet durch**
ein Fahrzeugsitz (1) nach einem der vorhergehenden Ansprüche.

## Claims

1. Vehicle seat (1) with a seat part (2) and with a backrest part (3) for supporting a driver in his/her seated position on the vehicle seat (1), **characterised in that** the vehicle seat (1) has an additional driver torso support device (8) for supporting a shoulder region of the driver, which device can be arranged outside the seat part (2) and the backrest part (3) and can be temporarily arranged at least in part in an otherwise vehicle seat-free torso support region (9) in front of the backrest part (3) and laterally and/or above the backrest part (3) in order to provide the driver sitting on the vehicle seat (1) with support, laterally off-centre of the backrest part (3), at least at the level of his/her shoulder region, when he/she adopts a seated working posture oriented to the side or backwards, the region laterally surrounding the vehicle seat (1) at least not permanently being blocked by the additional driver torso support device (8), and the additional driver torso support device (8) comprising a backrest extension device (4) which is arranged on the backrest part (3) so as to be movable in translation along a horizontal axis (21) in order to move the additional driver torso support device (8) substantially horizontally from an approximately central initial position (25) into an off-centre additional torso support position (26).

2. Vehicle seat (1) according to claim 1, **characterised in that** the additional driver torso support device (8) has a linear guide device (15) for horizontally shifting the additional driver torso support device (8) along the horizontal axis (21).

3. Vehicle seat (1) according to either claim 1 or claim 2, **characterised in that** the additional driver torso support device (8) has a spring-operated linear guide device (15) by means of which the additional driver torso support device (8) can be displaced automatically.

4. Vehicle seat (1) according to either claim 2 or claim 3, **characterised in that** the linear guide device (15) has an adjustment path (22) which projects laterally beyond the backrest part (3).

5. Vehicle seat (1) according to any of claims 2 to 4, **characterised in that** the linear guide device (15) has a rigid flat strip element (32) that is guided and mounted on roller elements (31).

6. Vehicle seat (1) according to claim 5, **characterised in that** the roller elements (31) are arranged off-centre above the backrest part (3).

7. Vehicle seat (1) according to any of claims 1 to 6, **characterised in that** an adjustment path (22) of the additional driver torso support device (8) is arranged substantially transversely to a height adjustment path (17) of the backrest extension device (4).

8. Vehicle seat (1) according to any of claims 1 to 7, **characterised in that** the additional driver torso support device (8) is arranged on the backrest part (3) so as to be actuatable by means of a pressure-actuated device on a cushion part (4) of the backrest part (3).

9. Commercial vehicle, in particular an agricultural commercial vehicle, comprising a vehicle seat (1) for a driver, **characterised by** a vehicle seat (1) according to any of the preceding claims.

## Revendications

1. Siège de véhicule (1) avec une partie d'assise (2) et avec une partie de dossier (3) pour le soutien d'un conducteur de véhicule dans sa position assise sur le siège de véhicule (1)
**caractérisé en ce que**
le siège de véhicule (1) en dehors de la partie d'assise (2) et de la partie de dossier (3) comprend un dispositif supplémentaire de soutien du tronc du conducteur du véhicule (8) pour le soutien d'une zone des épaules du conducteur du véhicule, qui peut être disposé temporairement au moins partiellement dans une zone de soutien de tronc (9), qui est sinon libre du siège de véhicule, devant la partie de dossier (3), ainsi que latéralement et/ou au-dessus de la partie de dossier (3), afin de soutenir le conducteur du véhicule assis sur le siège de véhicule (1), pendant sa position assise orientée latéralement ou vers l'arrière, au moins à la hauteur de sa zone d'épaules, de manière latérale excentrée de la partie de dossier (3), la zone latérale autour du siège de véhicule (1) n'étant pas bloquée de manière au moins permanente par le dispositif supplémentaire de soutien du tronc du conducteur du véhicule (8) et le dispositif supplémentaire de soutien du tronc du conducteur du véhicule (8) comprenant un dispositif de rallonge de dossier (4) qui est disposé de manière mobile en translation le long d'un axe horizontal (21) sur la partie de dossier (3), afin de déplacer le dispositif supplémentaire de soutien du tronc du conducteur du véhicule (8) de manière globalement horizontale d'une position initiale (25) approximativement centrée vers une position de soutien de tronc (26) supplémentaire excentrée.

2. Siège de véhicule (1) selon la revendication 1,
**caractérisé en ce que**
le dispositif supplémentaire de soutien du tronc du conducteur du véhicule (8) comprend un dispositif de guidage linéaire (15) pour le déplacement horizontal du dispositif supplémentaire de soutien du tronc du conducteur du véhicule (8) le long de l'axe horizontal (21).

3. Siège de véhicule (1) selon la revendication 1 ou 2,
**caractérisé en ce que**
le dispositif supplémentaire de soutien du tronc du conducteur du véhicule (8) comprend un dispositif de guidage linéaire (15) actionné par la force d'un ressort, à l'aide duquel le dispositif supplémentaire de soutien du tronc du conducteur du véhicule (8) peut être déplacé de manière automatisée.

4. Siège de véhicule (1) selon la revendication 2 ou 3,
**caractérisé en ce que**
le dispositif de guidage linéaire (15) présente un trajet de déplacement (22) qui dépasse latéralement de la partie de dossier (3).

5. Siège de véhicule (1) selon l'une des revendications 2 à 4,
**caractérisé en ce que**
le dispositif de guidage linéaire (15) comprend un élément à bande plate rigide (32) guidé et logé au niveau d'éléments de rouleaux (31).

6. Siège de véhicule (1) selon la revendication 5,
**caractérisé en ce que**
les éléments de rouleaux (31) sont disposés de manière excentrée au-dessus de la partie de dossier (3).

7. Siège de véhicule (1) selon l'une des revendications 1 à 6,
**caractérisé en ce qu'**
un trajet de déplacement (22) du dispositif supplémentaire de soutien du tronc du conducteur du véhicule (8) est disposé globalement transversalement par rapport à un trajet de réglage en hauteur (17) du dispositif de rallonge du dossier (4).

8. Siège de véhicule (1) selon l'une des revendications 1 à 7,
**caractérisé en ce que**
le dispositif supplémentaire de soutien du tronc du conducteur du véhicule (8) est disposé sur une partie de rembourrage (40) de la partie de dossier (3), de façon à pouvoir être actionné sur la partie de dossier (3).

9. Véhicule utilitaire, plus particulièrement véhicule utilitaire agricole, avec un siège de véhicule (1) pour un conducteur de véhicule,
**caractérisé par**
un siège de véhicule (1) selon l'une des revendications précédentes.
